## Europäisches Patentamt
## European Patent Office
## Office européen des brevets

(11) Publication number: **0 003 264**
**A1**

(12) # EUROPEAN PATENT APPLICATION

(21) Application number: 78300920.2

(22) Date of filing: 29.12.78

(51) Int. Cl.²: **F 01 K 25/10**
**F 17 C 9/02**

(30) Priority: 29.12.77 JP 159500/77

(43) Date of publication of application:
08.08.79 Bulletin 79/16

(84) Designated contracting states:
DE FR GB NL SE

(71) Applicant: **Nozawa, Reikichi**
**2-10-38, Ohokayama Meguroku**
**Tokyo(JP)**

(72) Inventor: **Nozawa, Reikichi**
**2-10-38, Ohokayama Meguroku**
**Tokyo(JP)**

(74) Representative: **Copp, David Christopher et al,**
**MARKS & CLERK 57-60 Lincoln's Inn Fields**
**London WC2A 3LS.(GB)**

(54) Method and plant for generating power.

(57) Power is generated by circulating Freon in a circuit where the Freon is vapourized, drives a gas turbine, and is condensed. The circuit is closed.

The Freon can be condensed in a condenser (8) which is cooled by liquid natural gas in the process of being gasified. The Freon can be vapourized in a condenser (3) where hot steam coming from an industrial plant is condensed, while heating the Freon.

FIG.1.

EP 0 003 264 A1

0003264

- 1 -

"POWER GENERATION"

The present invention relates generally to the field of power generation, and in particular to power generation where a liquefiable fluid medium is circulated in a circuit where it is vapourised and condensed and drives a gas turbine to provide a power output.

In accordance with the present invention, there is provided a method of generating power, characterized in that Freon is circulated in a closed circuit which includes means for heating the Freon, a turbine to be driven by the Freon vapour and means for condensing the Freon vapour to liquid.

Freon is a Registered Trade Mark of the Dupont Chemical Company.

The use of Freon as liquefiable medium is advantageous because of the characteristics of the medium set forth below:

1. Non flammable and inexplosive,

2. Chemically stable and non corrosive to metallic components of the power generation system,

3. Not very harmful in the case of leakage due to mechanical failure.

In preferred embodiments of the invention, the Freon is heated by the high temperature output from the cooling water system of an industrial plant such

- 2 -

0003264

as a power station. The condensing means is preferably a gasification plant for gasifying liquid natural gas.

Heat pollution is becoming a considerable problem in industrialised countries. For example, modern power stations, whether conventional or nuclear, use large quantities of cooling water which leaves the stations at a high temperature and must be disposed of. The heat is either discharged into the sea or into the atmosphere, and as the size and output of power stations increases, this discharged heat can affect the local environment.

A similar problem arises with liquid natural gas (referred to in the rest of this Specification as LNG). LNG is stored in the liquid state at a low temperature (around minus 162$^{\circ}$C) and must be vapourised before it can be used. This is conventionally done by passing the liquid gas through a heat exchanger in heat exchange relationship with, for example, sea water. The water is cooled and the gas heated, and large quantities of cold water must be discharged. This cold water can also adversely affect the environment.

The preferred embodiment of the present invention is able to make use of the heat from a power station and the cold from an LNG gasification plant to produce power, e.g. in the form of electricity, and to prevent the heat and the cold being discharged to the environment.

The present invention also provides apparatus for generating power, comprising a closed circuit for circulating Freon, means for heating the Freon, a gas turbine to be driven by vapourized Freon to generate power, and means for condensing the Freon.

The invention will now be further described, by way of example, with reference to the accompanying drawings, in which:

0003264

Figure 1 is a schematic illustration of apparatus for generating power, in accordance with the present invention; and

Figure 2 is a Mollier diagram.

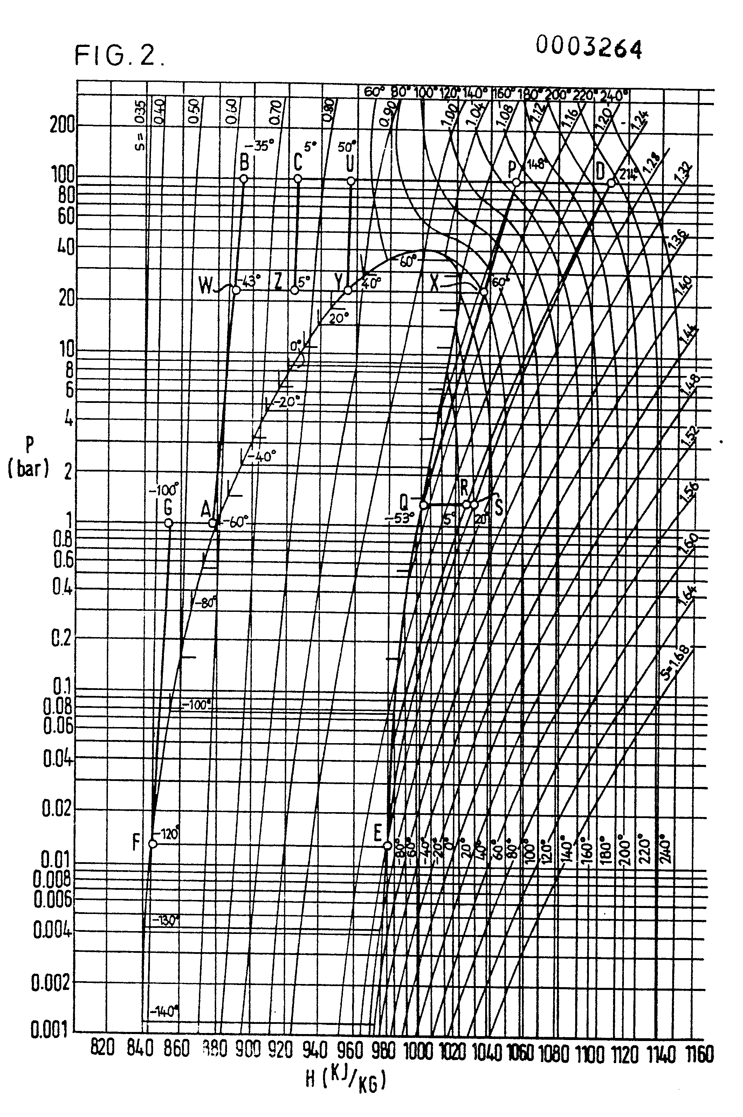

"Freon" is a collective term for fluorine, chlorine or other halogen substituted hydrocarbon compounds. A preferred Freon for use with the present invention is Freon R13 B1 (chemical formula $CF_3Br$). The Mollier diagram in Figure 2 is in respect of this Freon. However, other Freons could be used. Particular points to be born in mind in selecting a Freon are that it should have a low vapour pressure at $-162^{\circ}C$ (the boiling point of LNG); that it should be relatively cheap, and that it should have its freezing point in the proximity of $-162^{\circ}C$ and its critical point not far from the temperature of the environment.

The invention will now be further described with reference to three different cycles.

Some of the thermodynamic characteristics of Freon R13B1 are summarized as follows:

| | |
|---|---|
| Molecular weight | 148.9 |
| Freezing point | $-168^{\circ}C$ |
| Boiling point under the vapour pressure 4.3 mB | $-130^{\circ}C$ |
| Boiling point (under 1 atmosphere) | $-58^{\circ}C$ |
| Vapourization heat at boiling point | 28.6 Kcal/Kg |
| Critical temperature | $67^{\circ}C$ |
| Critical pressure | $39 \ Kg/cm^2$ |
| Critical density | 0.75 Kg |

In Figure 2, A, B, C,......P,Q etc. indicate thermodynamical states of R13B1.

0003264

## THE FIRST CYCLE

| State | Pressure (Bar) | Temperature (°C) | H (KJ/KG) |
|---|---|---|---|
| A | 1 | -60 | 877 |
| B | 100 | -35 | 893 |
| C | 100 | 5 | 923 |
| D | 100 | 214 | 1,108 |
| E(saturated vapour) | 0.013 | -120 | 980 |
| F(saturated liquid) | 0.013 | -120 | 846 |
| G | 1 | -100 | 848 |

State A is maintained in the interior of a storage tank of Freon R13B1. The numerical values of enthalpy are so adjusted as to give 1,000 KJ/Kg, at the critical point (40 Bars, 67°C). The first cycle is a kind of Rankine cycle where the loss is taken into account by introducing an increase in entropy, which can be taken as 0.04 KJ/Kg°C by experience in each of compression processes A → B, F → G and expansion process D → E.

The first cycle is made up of the following 7 processes:

A → B: pressurized by the compressor,

B → C: heated by the condenser of a steam power plant,

C → D: heated by the boiler,

D → E: expansion in driving the turbine,

E → F: liquefaction caused by the condenser,

F → G: pressurized by the compressor,

G → A: heated by the condenser of a steam power plant,

In this cycle, Freon R13B1 in state B and state G works as a cooling agent delivered to a condenser of a steam power plant in place of cooling water. This condenser is to cool the working steam of the steam power plant to 8°C (corresponding to saturated vapour pressure of 8 mm Hg) and to heat the Freon up to state C and state A. Thus, the exhaust heat from the condenser of the steam power plant can be completely absorbed by the Freon and the problem of heat pollution can be moderated.

The exit of the turbine is connected directly to a condenser which carries out the liquefaction process, $E \rightarrow F$, by using LNG (1 atmosphere, $-162^{o}C$) as a cooling agent. LNG is vapourized to be natural gas and is heated to the temperature $-130^{o}C$ after passing through the condenser. This reduces the cold pollution by 63%, which is brought about by the temperature normalization of LNG. The remaining 37% of the cold latent heat of LNG is partly utilized to maintain the Freon at $-60^{o}C$ in the storage tank.

In the first cycle, using KJ/Kg as unit, the energy balance is as follows:

Heat coming from a steam power plant: 59

    wherein   $B \rightarrow C$ : 30

             $G \rightarrow A$ : 29

Heat supplied by the boiler ($C \rightarrow D$): 185

Input energy delivered by compressors: 18

    wherein   $A \rightarrow B$ : 16

             $F \rightarrow G$ : 2

Mechanical energy generated by the turbine: 128

Heat discharged to the condenser: 134

The ratio of the mechanical energy generated to the total input energy is a sort of efficiency of the system. The efficiency, in this sense, of the first cycle is $128/(59 + 185 + 18) = 48\%$

But the heat energy 59 KJ/Kg discharged from a steam power plant can be taken as unpaid receipt. Economically therefore, we can make use of the "paid efficiency" defined by

$$\text{Paid efficiency} = \frac{\text{mechanical energy generated}}{\text{paid input energy}}$$

which, for the first cycle, has the value

$$128/(185 + 18) = 63\%$$

The first cycle has the following advantages:

1. High paid efficiency (up to 63%);
2. Capable of moderating the heat pollution caused by a steam power plant and the cold pollution caused by an LNG-gasification plant;
3. Capable of raising the heat efficiency of a steam power plant.

The last advantage 3 is based on the following fact:

The conventional steam power plant uses river or sea water as cooling agent for its condenser. This limits the vapour pressure in the condenser in the range 26 mm Hg (corresponding to the boiling point $27^{o}C$) to 38 mm Hg (corresponding to the boiling point $33^{o}C$). If sufficient Freon R13B1 at $5^{o}C$ is used as a cooling agent, then the vapour pressure in the condenser can be maintained at a pressure as low as 8 mm Hg (corresponding to the boiling point $8^{o}C$) and the heat efficiency of a steam power plant, usually 33% for example, may be improved by 3% to attain a heat efficiency of 36%.

## THE SECOND CYCLE

This is a reheating cycle that employs the following 4 stages to replace state D of the first cycle.

| State | Pressure (Bar) | Temperature ($^{o}C$) | H (KJ/Kg) |
|---|---|---|---|
| P | 100 | 148 | 1,055 |
| Q(saturated vapour) | 1.4 | -53 | 1,000 |
| R | 1.4 | 5 | 1,025 |
| S | 1.4 | 20 | 1,032 |

The second cycle is made up of the following 10 processes:

A → B : pressurized by the compressor,

B → C : heated by the condenser of a steam power plant

C → P :   heated by the boiler,

P → Q :   expansion in the high pressure turbine,

Q → R :   reheated by the condenser of a steam power
          plant,

R → S :   reheated by the boiler,

S → E :   expansion in the low pressure turbine,

E → F : liquefied by the condenser,

F → G :   pressurized by the compressor,

G → A :   heated by the condenser of a steam power
          plant.

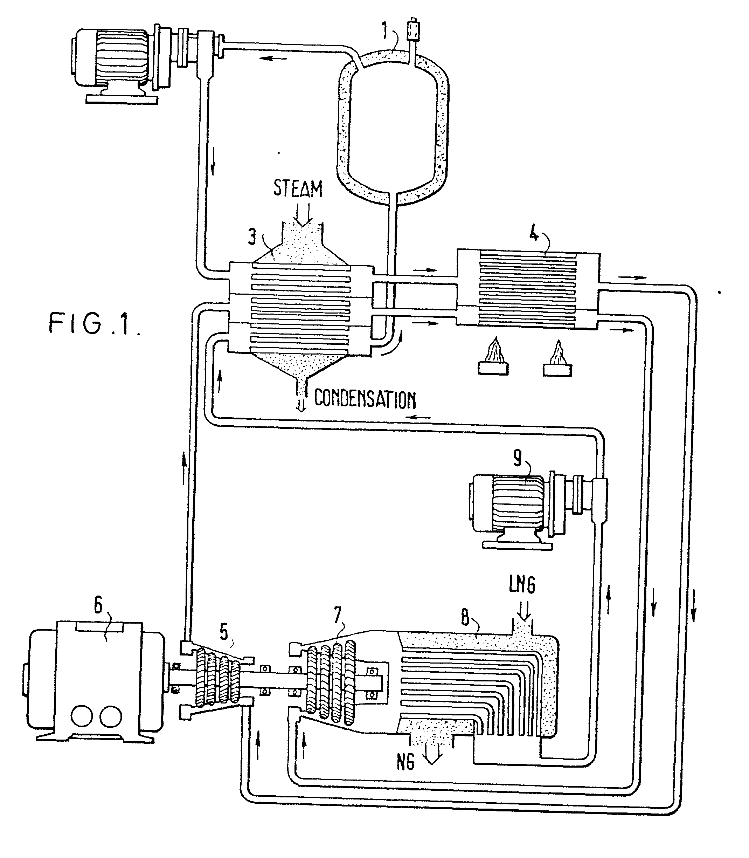

Referring now to the apparatus illustrated in Figure 1, 1 is a tank that contains Freon at state A (1 Bar, -60°C). The Freon taken from the tank is pressurized by the compressor 2 to a state B (100 Bar, - 35°C), then fed to a condenser 3 of a power . plant; the Freon absorbs heat discharged from the power plant through its condenser and is heated to state C (100 Bar, 5°C) before being fed to the boiler 4. The Freon is heated by the boiler to state P (100 Bar, 148°C) and led to the high pressure turbine 5, which generates electricity by means of a generator 6. After passing through the high pressure turbine, the Freon expands to a state Q (1.4 Bar, - 53°C), then it is led into the condenser of the steam power plant 3 and heated to a state R (1.4 Bar, 5°C). Thereafter, it is heated by the boiler to a state S (1.4 Bar, 20°C). Flowing out from the boiler 4, the Freon is led into the low pressure turbine 7 and generates electricity by means of a generator. After passing through the low pressure turbine, the Freon is led into a condenser 8 and is condensed to a state F (0.013 Bar, -120°C, liquid) by means of LNG (-162°C). Subsequently, it is pressurized to a state G (1 Bar, -100°C) by a compressor 9. The (1 Bar, - 100°C) Freon is led again into the condenser of the steam power plant and heated to state A (1 Bar, -60°C) and returned to the storage tank 1. Note that the condenser 8 is connected directly to the exit of the low pressure turbine 7.

In the expansion processes $P \to Q$ and $S \to E$, the increase in entropy, from experience, can be taken as 0.02 KJ/Kg$^o$C. The saturated state Q at the exit of the high pressure turbine can be attained by maintaining the Freon R13B1 at temperature - 53$^o$C. For this maintenance, the Freon in the storage tank (state A: -60$^o$C, 1 Bar) can be used as a cooling agent for a heat exchanger connected directly to the exit of the high pressure turbine.

The heat balance of the second cycle, using KJ/Kg as unit, is given as follows:

Energy input for compression ($A \to B$, $F \to G$):    18

Heat supplied by a steam power plant
($B \to C$, $Q \to R$, $G \to A$)                :    84

Heat supplied by the boiler ( $C \to P$, $R \to S$):   139

Energy generated by the turbine ($P \to Q$, $S \to E$):107

Heat discharged to the condenser ($E \to F$)   :   134

Thus, the paid efficiency for the second cycle is given by $\dfrac{\text{generated mechanical energy}}{\text{paid input energy}}$ = 107/ (18 + 139) = 68%. The improvements of the second cycle over the first cycle are:

1. Paid efficiency is raised from 63% to 68%;

2. Maximum temperature of the Freon in the cycle is lowered from 214$^o$C to 148$^o$C. Although Freons are in general chemically stable compounds, some of them have a tendency to dissolve very slowly in the temperature range of 105$^o$C to 150$^o$C, especially in the presence of oil, water, iron or copper. Therefore, for the safe, stable and lasting running of the system described, it is very important to employ a reheating cycle which has a relatively low maximum temperature of the working Freon.

## THE THIRD CYCLE

This is a reheating and regenerating cycle, wherein a part of the Freon is extracted from a mid-stage (state X) of the high pressure turbine and is mixed with cold freon (state Z) taken out from the storage tank (state A) to produce a saturated liquid (state Y). A regeneration process makes the Rankine cycle approximate more closely to a Carnot cycle and improves its heat efficiency.

An example is explained here, where X, Y, Z, and W are chosen on the isobar line of 23 bar which is the saturated vapour pressure at $40^{\circ}C$:

| State | Pressure (Bar) | Temperature ($^{\circ}C$) | H (KJ/Kg) |
|---|---|---|---|
| X | 23 | 60 | 1,035 |
| Y(saturated liquid) | 23 | 40 | 953 |
| Z | 23 | 5 | 924 |
| W | 23 | -43 | 888 |
| U | 100 | 50 | 955 |

The present regeneration proceeds with the heating of direct mixing type by extracted vapour. The third cycle is composed of the following 13 processes:

A → W :   pressurized by the compressor,

W → Z :   heated by the condenser of a steam power plant,

Z → Y :   heated by direct mixing with extracted vapour,

Y → U :   pressurized by a compressor,

U → P :   heated by the boiler,

P → Q :   expansion in the high pressure turbine,

Q → R :   reheated by the condenser of a steam power plant,

R → S :   reheated by the boiler,

S → E :   expansion in the low pressure turbine,

E → F :   liquefied by the condenser,

F → G :   pressurized by the compressor,

G → A :   heated by the condenser of the steam power plant,

X → Y :   cooled by the mixing of liquid Freon (state Z), with a% of the vapour Freon extracted from a mid-stage (state X) in the high pressure turbine.

The entropy increase in the pressurizing process

- 10 - 0003264

A → W is estimated to be 0.04 KJ/Kg$^o$C and the entropy increase in the pressurizing process Y → U is estimated to be 0.01 KJ/Kg$^o$C. Liquid Freon in state Z and extracted Freon vapour in state X are mixed together in the "extracted-gas heating device". Since the requirement for mixing in the extracted gas-heating device is given by

$$a (1,035 - 953) = (100 - a) (953 - 924),$$

we have

$$a = 26\% \text{ and } 100 - a = 74\%$$

The heat balance in the third cycle, using KJ/Kg as unit, is as follows:

Heat obtained from the consider
of a steam power plant = 67.

    wherein W → Z:  0.74 (924 - 888) = 27
            Q → R:  0.74 (1,025 - 1,000)  = 18.5
            G → A:  0.74 (877 - 848) = 21.5

Heat supplied by the boiler: 105

    wherein U → P:      1,055 - 955    = 100
            R → S: 0.74 (1,032 - 1,025) = 5

Heat discharged through the condenser: 99

        E → F: 0.74 (  980 -   846) = 99

Energy generated by the turbine:

    wherein P → X:      1,055 - 1,035  = 20
            X → Q: 0.74 (1,035 - 1,000) = 26
            S → E: 0.74 (1,032 -   980) = 38.5

Energy input by compressors: 11.5

    wherein A → W: 0.74 (  883 -   877) = 8
            Y → U:       955 -   953  = 2
            F → G: 0.74 (  848 -   846) = 1.5

The paid efficiency for the third cycle (a reheating and regenerating cycle) is

$$84.5/(105 + 11.5) = 72\%$$

In the first, second and third cycles described above, the working fluid R13B1 is condensed at -120$^o$C (corresponding to the saturated vapour pressure 13mB).

0003264

This is because of the present stage of technology which forces us to pay a very high cost to manufacture a large condenser maintaing a vacuum below 10 mB; of course, we can make an LNG-Freon power generation system more efficient by lowering the condenser temperature below $-120^{\circ}C$ in the future with more advanced technology.

For reference, some numerical figures on the liquid phase line in the R13B1 Mollier diagram (Log pressure/enthalpy diagram) are listed below:

| Temperature ($^{\circ}C$) | Saturated vapour pressure (Bar) | H (KJ/Kg) |
|---|---|---|
| -100 | 0.073 | 853 |
| -120 | 0.0129 | 847 |
| -130 | 0.0043 | 842 |
| -140 | 0.0012 | 839 |

### LNG-Freon-nitrogen power generation system

The paid efficiency 72% for the third cycle can further be improved to 78% by combining with it an LNG-nitrogen generation system, which involves a modification of the apparatus so far described.

This would be a duplex power generation system, wherein LNG as a cooling agent of the condenser of the LNG-Freon power generation system is replaced by cold nitrogen and a part of the heat absorbed by the nitogen is converted into mechanical energy.

A thermodynamic cycle of nitrogen used to attain the above purpose is described below:

| State | Temperature ($^{\circ}C$) | Pressure (atm) | H (cal/mol) |
|---|---|---|---|
| K | -150 | 50 | 680 |
| L | -124 | 50 | 1,500 |
| M(saturated vapour) | -158 | 20 | 1,370 |
| N(saturated liquid) | -158 | 20 | 600 |

K and L are states of nitrogen at the entrance and the exit respectively of the condenser which condenses Freon. The nitrogen gas in state L expands and begins to liquefy in state M at the entrance of a nitrogen-condenser (a condenser which condenses nitrogen) which is cooled by LNG $(-162^{o}C)$. At the exit of the nitrogen-condenser, nitrogen stays in state N. It is pressurized by a compressor to state K and is delivered to the Freon-condenser which heats up the nitrogen into state L, thus making up a closed cycle for nitrogen. A nitrogen-driven turbine is included in the circuit.

The heat balance in the above cycle of nitrogen, using cal/mol as unit, is as follows:

Energy input from the compressor (N → K):          80

Heat supplied by the Freon-condenser (K → L):    820.

Energy generated by the nitrogen-driven turbine (L → M):                                                    130

Heat discharged to LNG (M → N):                       770

Net energy generated: 130 - 80 =                        50

Thus, the heat efficiency of our nitrogen cycle is given by

Heat efficiency = $\dfrac{\text{net mechanical energy generated}}{\text{heat supplied to the system}} = \dfrac{50}{820} = 6\%$

When this LNG-nitrogen power generating system is combined with aforementioned third cycle (LNG-Freon reheating and regenerating system) to form a duplex system, the new paid efficiency is

$$\frac{\text{energy generated by the combined system}}{\text{paid energy input to the combined system}} = \frac{84.5 + (130 \times 99)/820}{105 + 11.5 + (80 \times 99)/820} = 79\%$$

The inventor of the present invention has filed a patent application related to the nitrogen power generation system on March 30, 1977 and the application was published in the Official Gazette of the Japanese Patent Office on October 25, 1978 (Volume 53 - 122040).

Although the foregoing description refers to utilization of the discharged heat of a steam power plant, the system is not in any way limited by this

- 13 -    0003264

embodiment.  Other heat sources that possess the same effect, such as the discharged heat from steel mills or other factories, can all be used to replace that of a steam power plant.  In like manner, the heat sink is not limited to LNG.

To sum up, a main characteristic of the present invention is the use of Freon as a working fluid; the utilization of the discharged heat of a steam power plant as heat source and LNG as heat sink is only a preferred embodiment of the present invention.

CLAIMS:

1.    A method of generating power, characterized in that Freon is circulated in a closed circuit which includes means (3,4) for heating the Freon, a turbine (6) to be driven by the Freon vapour and means (8) for condensing the Freon vapour to liquid.

2.    A method as claimed in claim 1, characterized in that the means for condensing the Freon comprises a gasification plant (8) for gasifying liquid natural gas where the Freon flows in heat exchange relationship with the natural gas.

3.    A method as claimed in claim 1, wherein the means for condensing the Freon comprises a condenser where the Freon flows in heat-exchange relationship with cold nitrogen which flows in a circuit where it is cooled by the gasification of liquid natural gas.

4.    A method as claimed in any preceding claim characterized in that the means for heating the Freon comprises a heat exchanger (3) where the Freon is vapourized by flowing in heat exchange relationship with steam leaving the cooling water system of an industrial plant, such as a power station.

5.    Apparatus for generating power, comprising a closed circuit for circulating Freon, means (3,4) for heating the Freon, a gas turbine (6) to be driven by vapourized Freon to generate power, and means (8) for condensing the Freon.

6.    Apparatus as claimed in claim 5, characterized in that the means for heating the Freon comprises a vapourization device (3) and a heating device (4).

7.    Apparatus as claimed in claim 6, characterized in that the vapourization device (3) is connected to the steam outlet of a cooling water system of an industrial plant, such as a power station.

8.    Apparatus as claimed in any one of claims 5 to 7, characterized in that the means for condensing the Freon is a gasification plant for gasifying
liquid natural gas arranged so that the Freon can
flow in heat exchange relationship with the natural
gas.

9.    Apparatus as claimed in any one of claims
5 to 7, characterized in that the means for condensing
the Freon is a closed circuit containing nitrogen and
arranged so that the Freon can flow in heat exchange
relationship with liquid nitrogen, said closed circuit
including a condenser unit arranged to be cooled
by the gasification of liquid natural gas, a compressor
for the nitrogen and a turbine to be driven by gaseous
nitrogen.

FIG.1.

0003264

FIG. 2.

0003264

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | FR - A - 1 336 318 (C.G.E.E.)<br><br>* Figures 1,3; page 1, right-hand column, line 10 - page 2, right-hand column line 51 *<br><br>-- | 1,2,3, 5,8 | F 01 K 25/10<br>F 17 C 9/02 |
| | US - A - 3 266 261 (ANDERSON)<br><br>* Figures 1,3; column 3, lines 19-69 *<br><br>-- | 1,2,5, 8 | |
| | US - A - 3 795 103 (ANDERSON)<br><br>* Figure 2; column 3, lines 32-57 *<br><br>-- | 1,5 | TECHNICAL FIELDS SEARCHED (Int.Cl.²)<br><br>F 01 K 25/08<br>25/10<br>23/02<br>9/00<br>3/18 |
| | DE - A - 1 922 779 (LINDE)<br><br>* Figure 1; page 2; paragraph 3 *<br><br>---- | 2,4,6, 7,8 | F 17 C 9/02 |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 12-04-1979 | KOVAC |